# FASCICULE DE BREVET EUROPEEN

(11) **EP 0 692 855 B1**
(45) Date de publication et mention de la délivrance du brevet: **27.05.1998**
(21) Numéro de dépôt: 95401590.5
(22) Date de dépôt: 03.07.1995
(51) Int. Cl.: H02G 3/06, H02G 3/08

(54) **Dispositif d'éclissage pour canalisation électrique**
Stossverbindungsvorrichtung für einen elektrischen Installationskanal
Connection device for an electrical ducting

(30) Priorité: 12.07.1994 FR 9408789
(43) Date de publication de la demande: 17.01.1996
(73) Titulaire: SCHNEIDER ELECTRIC SA, 92100 Boulogne Billancourt (FR)
(72) Inventeur: Jego, Gérard, F-21470 Brazey en Plaine (FR); Thierry, Jean-Pierre, F-21560 Arc-sur-Tille (FR); Nourry, Daniel, D-21000 Dijon (FR)
(74) Mandataire: Carias, Alain

(56) Documents cités:
- EP-A- 0 409 807
- NL-A- 7 501 166
- US-A- 3 562 402
- US-A- 3 831 130

## Description

La présente invention concerne un dispositif d'éclissage pour canalisation préfabriquée de distribution électrique, du type composable par aboutement de plusieurs tronçons allongés d'enveloppe à contour fermé, chaque tronçon d'enveloppe logeant un ensemble conducteur constitué par des conducteurs électriques parallèles isolés entre eux, le dispositif comprenant une pièce d'éclissage emmanchée à l'intérieur d'extrémités de deux tronçons d'enveloppe à abouter pour solidariser ceux-ci mécaniquement.

Il est nécessaire de protéger les conducteurs électriques inclus dans la canalisation des risques d'introduction ou d'adduction d'eau ou de condensat jusqu'à leurs parties nues, en particulier dans la zone d'éclissage des tronçons d'enveloppe aboutés.

L'invention a pour but d'améliorer l'étanchéité dans la région d'éclissage d'une canalisation électrique du type ci-dessus décrit.

Selon l'invention, la pièce intérieure d'éclissage est dotée extérieurement de rainures d'évacuation d'eau (ou de condensat) situées près d'un plan de joint des tronçons d'enveloppe aboutés.

La pièce intérieure d'éclissage peut être, soit un manchon allongé préalablement emmanché et fixé dans l'un des tronçons d'enveloppe, avec déport des extrémités nues de conducteurs vers une extrémité du manchon et à distance des rainures d'évacuation, soit une pièce munie d'une collerette médiane servant de butée bilatérale aux tronçons d'enveloppe et formant en outre une pièce d'interconnexion électrique. A la pièce intérieure d'éclissage peut avantageusement être associée une pièce extérieure d'éclissage recouvrant le plan joint des deux tronçons d'enveloppe.

La description qui suit est faite en regard des dessins annexés pour expliciter les caractéristiques et les résultats de l'invention.
- La figure 1 montre en élévation latérale une canalisation de distribution électrique.
- La figure 2 est une vue éclatée d'un dispositif d'éclissage conforme à l'invention.
- La figure 3 représente en perspective éclatée un manchon intérieur du dispositif de la figure 2.
- Les figures 4 et 5 représentent en perspective et respectivement en vue de côté une partie du dispositif retourné.
- La figure 6 est une vue de côté retournée et en coupe d'une variante d'exécution du dispositif selon l'invention.
- Les figures 7 et 8 montrent en perspective le dispositif de la figure 6 dans deux phase de montage.

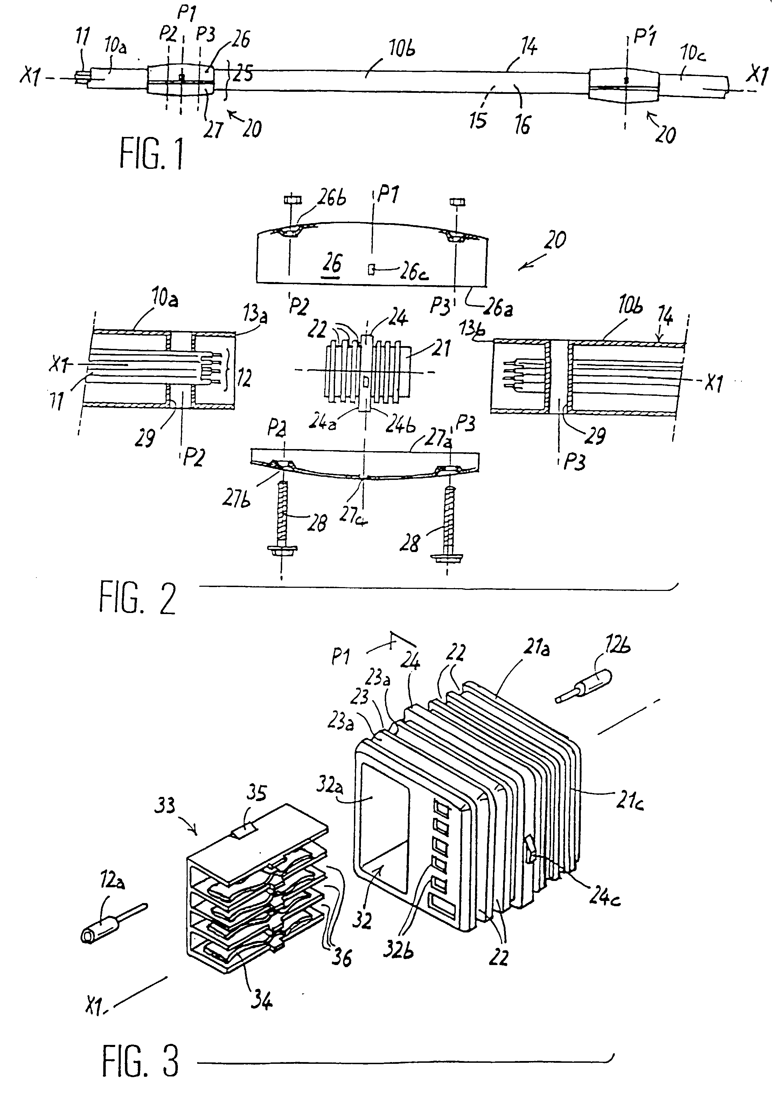

La canalisation préfabriquée de distribution électrique qui est représentée sur la figure 1 comprend plusieurs tronçons d'enveloppe 10 à contour fermé, c'est-à-dire de forme tubulaire allongée selon un axe X1. L'enveloppe loge un ou deux ensembles conducteurs 11 constitués chacun par plusieurs conducteurs électriques 12 parallèles sous forme de conducteurs indépendants, barres ou câbles, ou de nappe de câbles, les conducteurs ayant une longueur sensiblement égale à celle des tronçons d'enveloppe. Les tronçons d'enveloppe 10a, 10b,10c,... sont aboutés à leurs extrémités selon des plans P1,P'1. par des dispositifs d'éclissage 20 qui assurent d'une part un assemblage mécanique rigide des deux tronçons aboutés, d'autre part une connexion de leurs ensembles conducteurs respectifs.

Le dispositif d'éclissage 20 comprend dans un premier mode de réalisation (figures 2 à 5) une pièce prismatique 21 disposée intérieurement à la canalisation; cette pièce est centrée sur le plan P1 d'assemblage des deux tronçons d'enveloppe 10a,10b aboutés et emmanchée dans les extrémités de ces tronçons.

Selon l'invention, la pièce intérieure d'éclissage 21 est munie extérieurement, de chaque côté du plan P1, de rainures d'évacuation d'eau ou de condensat 22 situées dans des plans perpendiculaires à X1 et parallèles à P1. Ces rainures sont prévues au moins sur la face supérieure 21a et les faces latérales 21b,21c de la pièce 21 pour recevoir et canaliser l'eau. Les rainures 22 sont bordées par des nervures 23 présentant vers le plan de joint X1 des faces 23a droites, c'est-à-dire perpendiculaires à X1, et du côté opposé au plan de joint des faces obliques 23b (voir figure 3) de manière à faciliter l'emmanchement des tubes 10a,10b sur la pièce d'éclissage 21. La pièce 21 présente en son milieu une collerette 24 dont les flancs 24a,24b servent de butée respectivement aux extrémités 13a,13b des tronçons d'enveloppe 10a,10b. La pièce d'éclissage 21 a en outre un rôle de connexion électrique qui sera expliquée plus loin.

En combinaison avec la pièce 21 le dispositif d'éclissage 20 comprend, pour entourer extérieurement les tronçons d'enveloppe 10a,10b de part et d'autre du plan de joint P1, une pièce 25 en forme de coquille composée de deux demi-coquilles 26,27 à section en U assemblées, avec des bords longitudinaux 26a,27a contigus et parallèles à X1, au moyen de boulons 28 de serrage ; le profil en long des demi-coquilles est bombé pour caréner les parties saillantes des boulons 28. Ceux-ci sont disposés verticalement et traversent des orifices 26b,27b des demi-coquilles 26,27, ainsi que des colonnettes cylindriques verticales 29 d'axes P2,P3 rapportées de façon étanche dans les tronçons d'enveloppe 10 près des extrémités de ceux-ci. La section en U de la demi-coquille supérieure 26 coiffe la face supérieure 14 et la plus grande partie des faces latérales 15 des tronçons tubulaires d'enveloppe dans la région du plan de joint P1 ; ceci diminuant le risque d'introduction d'eau par le plan de joint P1. De même l'eau introduite au niveau des boulons 28 peut s'écouler par l'intérieur des colonnettes 29. L'eau ou le condensat néanmoins apparu entre les demi-coquilles et les tronçons d'enveloppe peut s'écouler par un ajutage 27c ménagé au fond de la demi-coquille inférieure 27. Et l'eau ou le condensat infiltré entre les flancs 24a,24b de la pièce d'éclissage 21 et les extrémités 13a,13b des tronçons est canalisée par les rainures 22 de la pièce 21 pour revenir au fond de la demi-coquille 27 via le fond percé ou non des tronçons.

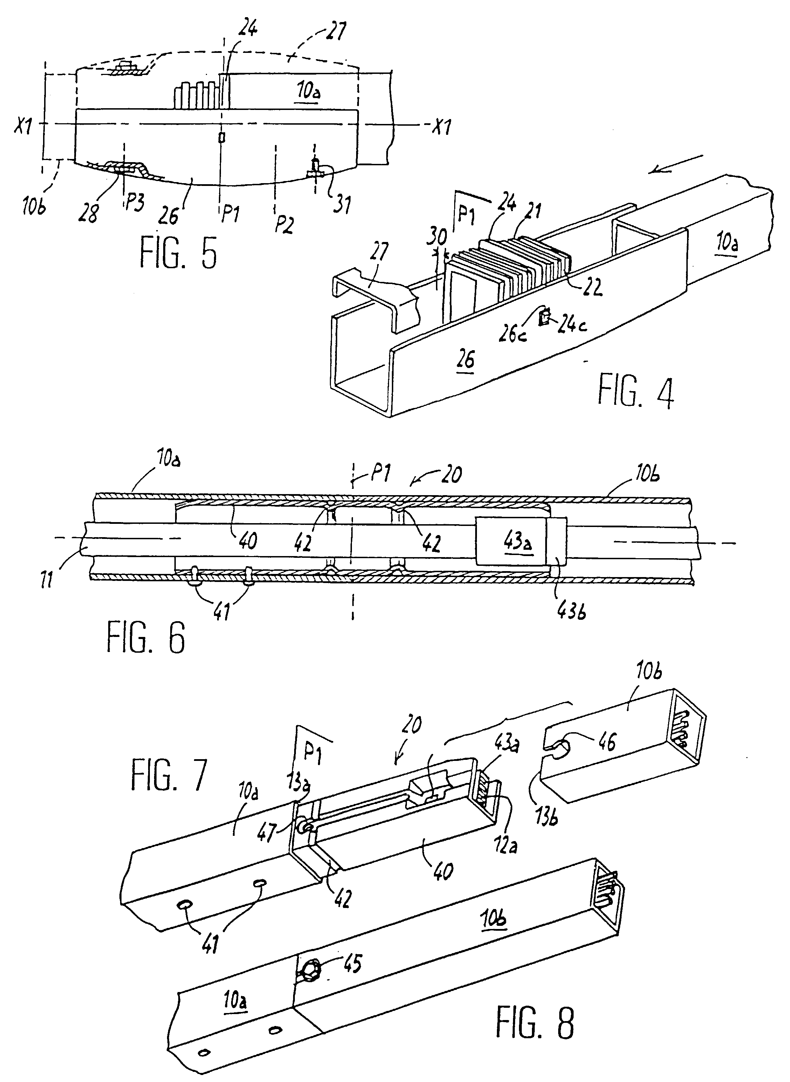

Des éléments d'encliquetage 24c sont prévus sur la pièce 21, par exemple sur sa collerette médiane 24, pour coopérer avec des ouvertures 26c de la demi-coquille supérieure. L'assemblage mécanique d'éclissage a ainsi lieu de la manière suivante (voir figures 4 et 5): la pièce 21 est encliquetée dans la demi-coquille supérieure 26 - montée renversé sur les figures 4 et 5 - et laisse sur son pourtour, entre les nervures 23 et les faces internes de la demi-coquille 26, un intervalle 30 permettant d'insérer le tronçon d'enveloppe 10a comme indiqué par la flèche de la figure 4. Le tronçon 10a mis en butée contre la collerette 24 peut dès lors être fixé à la demi-coquille 26 par une vis d'assemblage 31. Le sous-ensemble ainsi formé est prêt à recevoir - en tirets sur la figure 5 - le tronçon 10b par translation selon X1, puis butée contre la collerette 24. La demi-coquille 27 est ensuite posée et les boulons 28 sont engagés dans les colonnettes 29 et leurs écrous vissés pour serrer les demi-coquilles.

La pièce 21 a aussi une fonction d'éclissage électrique. Elle comprend à cet effet deux logements longitudinaux 32 orientés selon la direction X1 et ouverts d'un côté en 32a pour recevoir un organe 33 portant des pinces de contact élastique 34 et des conducteurs 12a de l'un des tronçons 10a et de l'autre côté 32b pour l'introduction de conducteurs 12b de l'autre tronçon 10b. Les organes 33 sont ici des tiroirs introduits et encliquetés par des moyens 35 dans les logements 32 (dont un seul est visible figure 3) ; le corps de chaque tiroir est compartimenté en autant de logements 36 que de conducteurs possibles ; les logements 36 sont ouverts latéralement pour recevoir les pinces de connexion 34 lors du montage du sous-ensemble d'interconnexion. Il convient d'observer que la connexion électrique de la nappe de conducteurs 11 de chaque tronçon 10 avec les pinces de contact 34 s'effectue par enfichage quand on emmanche le tronçon correspondant sur la pièce intérieure d'éclissage 21.

Dans le mode de réalisation des figures 6 à 8, le dispositif d'éclissage 20 comprend une pièce allongée 40 à section en U disposée intérieurement à la canalisation et fixée à l'un des tronçons 10a d'enveloppe, par exemple par des rivets 41 situées au-dessous de l'enveloppe ou par tout moyen analogue. La pièce 40 présente, de chaque côté du plan P1 d'assemblage des deux tronçons 10a,10b, une rainure périphérique 42 d'évacuation d'eau ou de condensat. Il convient de noter que, sur les figures 4 à 8, la canalisation et son dispositif d'éclissage sont représentés retournés, l'étanchéité recherchée étant bien entendu obtenue dans la position inverse illustrée sur les figures 1 et 2.

La nappe 11 de conducteurs logés dans le tronçon 10a (10b) est muni à son extrémité d'un connecteur 43a (43b) maintenu par des moyens d'encliquetage 44. Les extrémités nues des conducteurs 12a du tronçon 10a sont situées près d'une extrémité du manchon 40 à distance des rainures d'évacuation 42. Avant assemblage des tronçons d'enveloppe, l'une des rainures 42 est donc cachée et l'autre apparente. Le tronçon d'enveloppe 10b est emmanché sur la pièce d'éclissage mécanique 40 jusqu'à butée de sa tranche 13b contre la tranche 13a du tronçon 10a, puis est fixé au tronçon 10a par une vis 45 ; cette vis traverse un orifice 46 du tronçon 10b et est engagée dans un trou taraudé 47 de la pièce d'éclissage 40. Le fond du tronçon 10b est muni ou non d'un orifice d'évacuation en regard de la rainure apparente 42.

## Revendications

1. Dispositif d'éclissage pour canalisation électrique préfabriquée composable par aboutement de plusieurs tronçons allongés d'enveloppe à contour fermé, chaque tronçon d'enveloppe logeant un ensemble conducteur constitué par des conducteurs électriques parallèles, le dispositif présentant une pièce d'éclissage emmanchée à l'intérieur d'extrémités de deux tronçons d'enveloppe à abouter pour les solidariser mécaniquement,
caractérisé par le fait que la pièce intérieure d'éclissage (20) est dotée extérieurement de rainures d'évacuation d'eau (22,42) situées près d'un plan de joint (P1) des tronçons d'enveloppe aboutés (10a,10b).

2. Dispositif selon la revendication 1, caractérisé par le fait que la pièce intérieure d'éclissage (20) est un manchon allongé (40) préalablement emmanché et fixé dans l'un des tronçons d'enveloppe (10a), les extrémités nues des conducteurs (12a) du tronçon considéré étant situées près d'une extrémité du manchon à distance des rainures d'évacuation (42).

3. Dispositif selon la revendication 1, caractérisé par le fait que la pièce intérieure d'éclissage (21) est munie extérieurement d'une collerette médiane (24) servant de butée bilatérale aux deux tronçons d'enveloppe (10,10b)

4. Dispositif selon la revendication 1, caractérisé par le fait qu'une pièce extérieure d'éclissage (25) en forme de coquille recouvre le plan de joint (P1).

5. Dispositif selon la revendication 4, caractérisé par le fait que la pièce intérieure d'éclissage (21) est encliquetée dans la pièce extérieure d'éclissage (25) de manière à ménager entre les deux pièces un intervalle (30) d'insertion pour les extrémités des tronçons d'enveloppe (10a,10b).

6. Dispositif selon la revendication 1, caractérisé par le fait que la pièce intérieure d'éclissage (21) présente de part et d'autre du plan de joint (P1) plusieurs rainures extérieures (22) d'évacuation et intérieurement des logements longitudinaux (32) pour des organes (33) d'interconnexion électrique.

7. Dispositif selon la revendication 6, caractérisé par le fait qu'à chaque ensemble (11) de conducteurs est associé dans la partie intérieure d'éclissage (21) un logement (32) dans lequel est encliqueté un sous-ensemble (33) d'interconnexion comprenant un corps compartimenté en autant de logements (36) que de conducteurs et recevant dans chaque logement des pinces élastiques de connexion (34).

## Patentansprüche

1. Stossverbindungsvorrichtung für einen vorgefertigten elektrischen Kanal, der durch Aneinanderfügung von mehreren länglichen Mantelabschnitten mit geschlossener Kontur gebildet werden kann, wobei jeder Mantelabschnitt eine Leiterbaugruppe enthält, die aus parallelen elektrischen Leitern besteht, wobei die Vorrichtung ein Verbindungsteil umfasst, das in die Enden von zwei aneinanderzufügenden Mantelabschnitten eingeführt wird, um sie mechanisch miteinander zu verbinden,
dadurch gekennzeichnet, dass das interne Verbindungsteil (20) aussen mit Wasserableitungsrillen (22, 42) ausgerüstet ist, die in der Nähe einer Stossfläche (P1) der aneinandergefügten Mantelabschnitte (10a, 10b) angeordnet sind.

2. Vorrichtung nach Anspruch 1, dadurch gekennzeichnet, dass das interne Verbindungsteil (20) eine längliche, zuvor in einen der Mantelabschnitte (10a) eingeführte und befestigte Muffe (40) ist, wobei die blanken Enden der Leiter (12a) des betrachteten Abschnitts in der Nähe eines Endes der Muffe in Abstand zu den Ableitungsrillen (42) angeordnet sind.

3. Vorrichtung nach Anspruch 1, dadurch gekennzeichnet, dass das interne Verbindungsteil (21) aussen mit einem mittleren Kragen (24) ausgerüstet ist, der als zweiseitiger Anschlag für die beiden Mantelabschnitte (10, 10b) dient.

4. Vorrichtung nach Anspruch 1, dadurch gekennzeichnet, dass die Stossfläche (P1) von einem externen, schalenförmigen Verbindungsteil (25) abgedeckt wird.

5. Vorrichtung nach Anspruch 4, dadurch gekennzeichnet, dass das interne Verbindungsteil (21) so in das externe Verbindungsteil (25) eingerastet wird, dass zwischen diesen beiden Teilen ein Zwischenraum (30) zur Einfügung der Enden der Mantelabschnitte (10a, 10b) besteht.

6. Vorrichtung nach Anspruch 1, dadurch gekennzeichnet, dass das interne Verbindungsteil (21) auf beiden Seiten der Stossfläche (P1) mehrere externe Wasserableitungsrillen (22) und in seinem Inneren längliche Aufnahmen (32) für Zwischenschaltungsorgane (33) aufweist.

7. Vorrichtung nach Anspruch 6, dadurch gekennzeichnet, dass jeder Leiterbaugruppe (11) im internen Verbindungsteil (21) eine Aufnahme (32) zugeordnet ist, in die eine Zwischenschaltungs-Unterbaugruppe (33) eingerastet wird, die aus einem in so viele Aufnahmen (36) wie vorhandene Leiter unterteilten Körper besteht, und in jeder Aufnahme federnde Anschlussklemmen (34) aufnimmt.

## Claims

1. Fishplate device for prefabricated electrical trunking assembled by butt-jointing a plurality of closed contour elongate enclosure sections, each enclosure section housing a conductor assembly comprise parallel electrical conductors, the device including a fishplate member fitting inside ends of two enclosure sections to be butt-jointed to fasten them together mechanically,
characterised in that the internal fishplate member (20) has water drainage grooves (22, 42) on its outside near a mating plane (P1) of the butt-jointed enclosure sections (10a, 10b).

2. Device according to claim 1 characterised in that the internal fishplate member (20) is an elongate sleeve (40) previously inserted and fixed into one of the enclosure sections (10a), the bared ends of the conductors (12a) of the section in question being near one end of the sleeve at a distance from the drainage grooves (42).

3. Device according to claim 1 characterised in that the internal fishplate member (21) has a central external flange (24) providing a two-sided abutment for two enclosure sections (10a, 10b).

4. Device according to claim 1 characterised in that a shell-form external fishplate member (25) covers the mating plane (P1).

5. Device according to claim 4 characterised in that the internal fishplate member (21) is clipped into the external fishplate member (25) in such manner as to leave between the two members a gap (30) for inserting the ends of the enclosure sections (10a, 10b).

6. Device according to claim 1 characterised in that the internal fishplate member (21) has on each side of the mating plane (P1) a plurality of exterior drainage grooves (22) and interior longitudinal housings (32) for electrical interconnect members (33).

7. Device according to claim 6 characterised in that each conductor assembly (11) is associated in the internal fishplate member (21) with a housing (32) into which is clipped an interconnect subassembly (33) comprising a body compartmented to provide the same number of housings (36) as conductors and receiving in each housing resilient connection clamps (34).
